# EUROPEAN PATENT SPECIFICATION

(11) **EP 3 693 672 B1**
(45) Date of publication and mention of the grant of the patent: **20.12.2023**
(21) Application number: 20155825.1
(22) Date of filing: 06.02.2020
(51) Int. Cl.: F24D 3/18, F24D 10/00, F24D 11/02, F24D 19/10

(54) **HYBRID HEATING SYSTEM USING PRIMARY HEATING**
HYBRIDHEIZSYSTEM MIT PRIMÄRHEIZUNG
SYSTÈME DE CHAUFFAGE HYBRIDE UTILISANT UN CHAUFFAGE PRIMAIRE

(30) Priority: 08.02.2019 FI 20195091
(43) Date of publication of application: 12.08.2020
(73) Proprietor: HögforsGST Oy, 79100 Leppävirta (FI)
(72) Inventor: HARTMAN, Antti, 15560 NASTOLA (FI)
(74) Representative: Kespat Oy

(56) References cited:
- EP-A2- 2 397 782
- WO-A2-2011/105881
- US-A1- 2014 366 815
- Anonymous: "Poistoilmalämpöpumppu (PILP) kaukolämpötaloon: ohjeet suunnittelijalle", Energiateollisuus, 1 December 2017 (2017-12-01), pages 1-5, XP055676926, Retrieved from the Internet: URL:https://energia.fi/files/2137/Poistoil malampopumppu_kaukolampotaloon_ohjeet_suun nittelijalle.pdf [retrieved on 2020-03-17]

## Description

The object of the invention is a hybrid heating according to claim 1.

Often a chilled service water heat exchanger is connected in series to a service water heat exchanger and a heating circulation heat exchanger so that the circulation of returning service water is connected between said upper and lower service water heat exchangers.

In particular in larger facilities, it makes sense to use, in addition to district heating, a heat pump whose heat source is, for example, geothermal energy or exhaust air. As the contracts regarding the supply of district heat invariably include stipulations e.g. pertaining to a minimum cooling of district heating water, this limits the utilization of heat pumps.

Finnish Energy (Energiateollisuus ry) has released statements regarding the installation of exhaust air heat pumps (EAHP) in buildings with district heating: Workgroup on heat usage 30.10.2017; "Exhaust air heat pumps (EAHP) in buildings with district heating; guidelines for planners". The release proposes example configurations (hybrid 1 and hybrid 2). The release proposes optionally guiding the heating of the heat pump to the chilled service water heating if any heat is left over after the heating of the heating circulation.

The situation arises in particular in summertime in buildings that there is no heat consumption, but there is a need for cooling. For this purpose, condensers are often typically mounted on the roof of the building as a heat sink for the heat pump so that the latter is able to generate a cooling. So-called roof-top units are known, in which exhaust air in the incoming-air/exhaust-air unit to be mounted on the roof can act either as a heat source in a heat recovery function as well as as a heat sink in a cooling function. The coupling of such a unit to another system is not practical, because the integration benefit of the unit is then lost completely.

The aim of the invention is to provide a novel system for allowing the production of a cooling also in cases where there is no actual heat sink. The hybrid system according to the invention is characterized by what is proposed in the claims.

The implication of the several heat pumps connected thermodynamically in series is that each of them works with a small heat coefficient. Their efficiency in this case is exceptional.

2 - 6 heat pumps, most advantageously 3 - 5 heat pumps, can be provided. 2 - 5, most advantageously 3 - 4, exhaust-air heat recovery devices connected in series are provided. The overall temperature difference on the side of the evaporator is 10 - 20 °C, most advantageously 12 - 16 °C.

The overall effect of arranging circulation water to be heated/cooled consecutively is 40 - 95 % of the combined sum of the different temperature differences realized by the condenser/ evaporator.

Advantageously, the fan of the exhaust-air heat recovery unit is before, in the direction of flow, the exhaust-air heat recovery elements. It is advantageous to construct the exhaust-air heat recovery elements and the fan as separate, uniform units so that it is advantageous to install the fan as a separate component before the unit formed by the exhaust-air heat recovery elements. This way, both the exhaust-air heat recovery elements and the fan can be easily detached from the exhaust-air heat recovery unit and maintained or replaced.

In the system in accordance with the invention, the primary heat can be generated in different ways - district heating is merely one application. An electric boiler can also be mentioned as a typical primary heat generator.

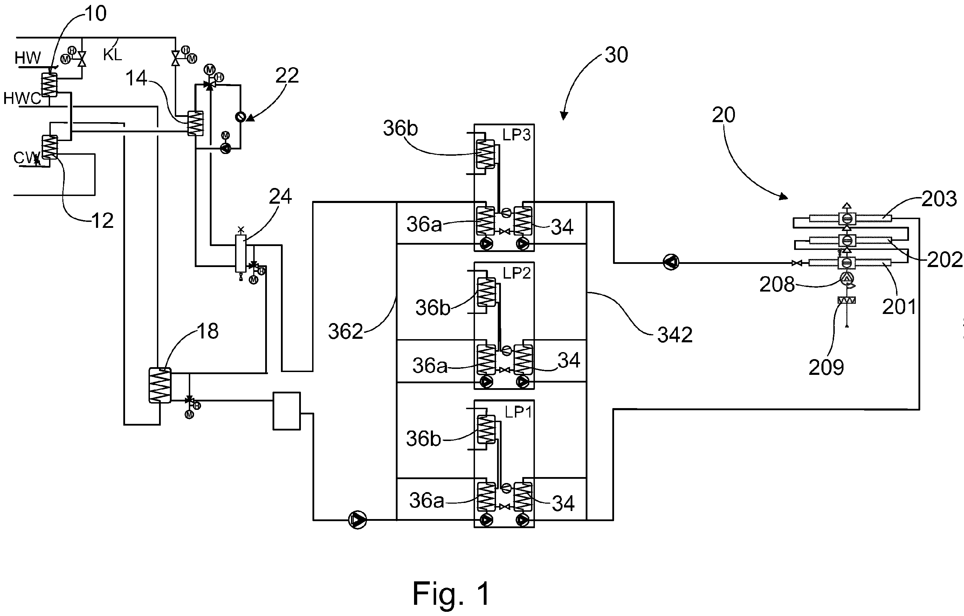

The invention is explained in the following with reference to the attached Figure 1, which shows a hybrid system using district heating and utilizing exhaust-air heat by means of a heat pump.

The basis of the system of Figure 1 is, first, a basic configuration that utilizes district heat in a conventional manner, which includes a district-heat primary circuit heating in parallel a service water heat exchanger 10, i.e. an upper service water heat exchanger and a heating circulation heat exchanger 14 as well as a chilled service water CW heat exchanger 12, i.e. lower service water heat exchanger connected cooperatively in series to the former, in which the returning service water circulation HWC is connected between said upper and lower service water heat exchangers 12, 10. A conventional system includes a heating circuit 22 which circulates circulation water in a controlled manner via said heat exchanger 14 of the district heating.

Designated in the heat pump circuit 30 in Figure 1 is a first condenser 36b for utilizing the heat quantity of a superheated medium. The exploitation of this superheating is not essential from the standpoint of this invention.

The return flow of the auxiliary heating can be guided in a controlled manner to the chilled water CW auxiliary heating by means of the heat exchanger 18, which is in series in the chilled service water heating system with an actual chilled service water heat exchanger 12. The system includes three-way control valves by means of which the essential heat of the heat pump can be optimally guided from the heat exchanger 36a to the desired destination in accordance with the heat consumption situation. Consequently, if there is no consumption in the heating circuit, the heating generated by the heat pump can be guided to the chilled service water heating or vice versa.

The so-called free flow separator 24 is an optional component, in which the input of the load of the heating circuit from the heat exchanger 14, its output, the input of the auxiliary heating from the condenser 36a and the output of the auxiliary heating are joined to a same space. With the help of this flow component, the circulation flow of the load circuit is not disturbed by the supply flow of the auxiliary heating, but rather it is possible to transfer a volume flow essentially commensurate with the load flow from the inflow of the auxiliary heating.

A component known *per se* is the heat pump circuit 30 comprising a compressor 31, an expansion valve 32, an evaporator 34 and a condenser 36a, connected so as to utilize by means of its evaporator a selected external heat source, here the exhaust-air apparatus 20, as well as to emit heat by means of its condenser 36a in parallel with said district-heat heat exchanger 14 in a selected manner.

The heat-pump circuit now comprises three heat pumps HP1, HP2 and HP3 connected thermodynamically in series. The condenser 36a of each heat pump HP1, HP2 and HP3 is advantageously connected by a branching connection (parasite configuration) at each feed and each return and own pump, to the circulation circuit 362, i.e., they are equipped on the side of the evaporator/condenser with a pump for circulating the medium from each shared line 342, 362, so that each heat pump only raises the temperature of the circulation water by 3 - 4 °C. With the three consecutive heat pumps, it is possible to produce the necessary overall increase in temperature. In the branching connection (parasite configuration), each heat pump works with a difference in temperature (dT) of 3 - 4 °C, while the dT of the system is flexible between, e.g., 8 - 15 °C depending on the situation.

Correspondingly, the evaporators of the heat pumps HP1, HP2 and HP3 are connected by a parasite configuration to the circulation circuit 342, which conducts the cooled medium to the exhaust-air heat recovery unit 20. There, correspondingly, three conventional exhaust-air heat recovery devices are also provided in series for both the air circulation and the fluid circulation. The medium flows connected in series are connected to a counter-flow.

This so-called parasite configuration yields in a stable situation almost the same result as evaporators/condensers connected consecutively. The advantages, however, are clear in connection with different transient phenomena such as in the event of malfunctions or modifications to which the operation of the system readily adapts. The flow of the sub-circuit in the parasite configuration is advantageously 90 % of the main flow, generally 60 - 100 % of the main flow.

The fan 208 as well as the filter 209 of the exhaust-air heat recovery unit 20 are, in the direction of flow, before the exhaust-air heat recovery elements 201, 202, 203. The exhaust-air heat recovery elements 201, 202, 203 are advantageously formed as a uniform unit so that both the exhaust-air heat recovery elements 201, 202, 203 and the fan 208 and filter 209 can be easily detached from the exhaust-air heat recovery unit 20 and maintained or replaced as necessary.

## Claims

1. A hybrid heating system, which includes
o a primary circuit of a primary heat generator, comprising in parallel a service water heat exchanger (10) and a heating circulation heat exchanger (14) to be heated with the primary heat,
o a heating circuit (22) circulating circulation water in a controllable manner at the points of consumption via said heating circulation heat exchanger (14) heated with the primary heat,
o heat-pump units (HP1, HP2, HP3) connected, each comprising a compressor (31), an expansion valve (32), an evaporator (34) and a condenser (36a, 36b), and connected so as to utilize in series the exhaust-air heat recovery (20) by means of their evaporators (34)), wherein said heat source comprises at least one exhaust-air heat exchanger (20),
**characterized in that** said heat-pump units (HP1, HP2, HP3) are connected thermodynamically in series, and all units together connected so as to utilize in series the exhaust-air heat recovery (20) by means of their evaporators (34) and so as to emit a secondary heat in series by means of their condensers (36a) as a unit in parallel with said heating circulation heat exchanger (14), and
the exhaust-air heat recovery unit (20) consists of a plurality of exhaust-air heat recovery elements (201, 202, 203) connected in series, wherein the medium circulations on both sides are connected in series and together are connected to a counter-flow so that a recurring rise in temperature of the medium and a recurring cooling of the exhaust air are realized.

2. The hybrid heating system according to claim 1, **characterized in that** the heat-pump units (HP1, HP2, HP3) connected thermodynamically in series, are connected on the side of the evaporator (34) and on the side of the condenser (36a, 36b) to each circulation circuit by a branching connection at each feed and each return, i.e. are equipped on the side of the evaporator/condenser with a pump for circulating the medium from each shared line (342, 362).

3. The hybrid heating system according to claim 1 or 2, **characterized in that** 2 - 6 heat pumps, most advantageously 3 - 5 heat pumps, are provided.

4. The hybrid heating system according to any one of claims 1 - 3, **characterized in that** 2 - 5, most advantageously 3 - 4, exhaust-air heat recovery devices connected in series are provided.

5. The hybrid heating system according to any one of claims 1 - 4, **characterized in that** the overall temperature difference on the side of the evaporator is 10 - 20 °C, most advantageously 12 - 16 °C.

6. The hybrid heating system according to any one of claims 1 - 5, **characterized in that** the overall effect of the consecutively arranged circulation water to be heated/cooled is 40 - 95 % of the combined sum of the different temperature differences realized by the condenser/evaporator.

7. The hybrid heating system according to any one of claims 1 - 3, **characterized in that** the fan (208) of the exhaust-air heat recovery unit (20) is, in the direction of flow, before the exhaust-air heat recovery elements (201, 202, 203).

8. The hybrid heating system according to claim 1 **characterized in that** there is a chilled service water heat exchanger (12) operatively connected in series with said heat exchangers connected parallelly, namely said service water heat exchanger (10) and said heating circulation heat exchanger (14), and circulation of returning service water (HWC) is connected between the upper and lower service water heat exchangers (12, 10).

## Patentansprüche

1. Hybridheizsystem, das Folgendes einschließt
o eine primäre Schaltung eines primären Wärmeerzeugers, die parallel einen Brauchwasserwärmetauscher (10) und einen mit der primären Wärme zu beheizenden Heizkreislaufwärmetauscher (14) umfasst,
o eine Heizschaltung (22), die über den mit der primären Wärme beheizten Heizkreislaufwärmetauscher (14) Zirkulationswasser steuerbar an den Verbrauchsstellen zirkulieren lässt,
o Wärmepumpeneinheiten (HP1, HP2, HP3) verbunden sind, die jeweils einen Kompressor (31), ein Erweiterungsventil (32), einen Verdampfer (34) und einen Kondensator (36a, 36b) umfassen und so verbunden sind, dass sie die Abluftwärmerückgewinnung (20) mittels ihrer Verdampfer (34) in Reihe nutzen, wobei die Heizquelle mindestens einen Abluftwärmetauscher (20) umfasst,
**dadurch gekennzeichnet, dass** die Heizpumpeneinheiten (HP1, HP2, HP3) thermodynamisch in Reihe verbunden sind und alle Einheiten zusammen so verbunden sind, dass sie in Reihe die Abluftwärmerückgewinnung (20) mittels ihrer Verdampfer (34) nutzen und in Reihe mittels ihrer Kondensatoren (36a) als Einheit parallel zu dem Heizkreislaufwärmetauscher (14) eine Sekundärhitze ausstrahlen, und
die Abluftwärmerückgewinnungseinheit (20) aus mehreren in Reihe verbundenen Abluftwärmerückgewinnungselementen (201, 202, 203) besteht, wobei die Mediumkreisläufe auf beiden Seiten in Reihe verbunden sind und zusammen zu einem Gegenstrom verbunden sind, sodass ein wiederkehrender Temperaturanstieg des Mediums und eine wiederkehrende Abkühlung der Abluft realisiert werden.

2. Hybridheizsystem nach Anspruch 1, **dadurch gekennzeichnet, dass** die thermodynamisch in Reihe verbundenen Heizpumpeneinheiten (HP1, HP2, HP3) auf der Seite des Verdampfers (34) und auf der Seite des Kondensators (36a, 36b) mit jeder Zirkulationsschaltung durch eine abzweigende Verbindung bei jedem Vorlauf und jedem Rücklauf verbunden sind, d. h. auf der Seite des Verdampfers/Kondensators mit einer Pumpe für die Zirkulation des Mediums aus jeder gemeinsamen Leitung (342, 362) ausgestattet sind.

3. Hybridheizsystem nach Anspruch 1 oder 2, **dadurch gekennzeichnet, dass** 2-6 Wärmepumpen, vorteilhafterweise 3-5 Wärmepumpen, bereitgestellt werden.

4. Hybridheizsystem nach einem der Ansprüche 1 bis 3, **dadurch gekennzeichnet, dass** 2-5, besonders vorteilhaft 3-4, in Reihe verbundene Abluftwärmerückgewinnungsvorrichtungen bereitgestellt werden.

5. Hybridheizsystem nach einem der Ansprüche 1 bis 4, **dadurch gekennzeichnet, dass** der Gesamttemperaturunterschied auf der Seite des Verdampfers 10-20 °C, am vorteilhaftesten 12-16 °C beträgt.

6. Hybridheizsystem nach einem der Ansprüche 1 bis 5, **dadurch gekennzeichnet, dass** die Gesamtwirkung des nacheinander angeordneten zu heizenden/kühlenden Zirkulationswassers 40-95 % der kombinierten Summe der verschiedenen Temperaturunterschiede beträgt, die durch den Kondensator/Verdampfer realisiert werden.

7. Hybridheizsystem nach einem der Ansprüche 1 bis 3, **dadurch gekennzeichnet, dass** das Gebläse (208) der Abluftwärmerückgewinnungseinheit (20) in Richtung des Flusses vor den Abluftwärmerückgewinnungselementen (201, 202, 203) liegt.

8. Hybridheizsystem nach Anspruch 1, **dadurch gekennzeichnet, dass** ein gekühlter Brauchwasserwärmetauscher (12) betriebsmäßig mit den parallel verbundenen Wärmetauschern, d. h. dem Brauchwasserwärmetauscher (10) und dem Heizkreislaufwärmetauscher (14), in Reihe verbunden ist und der Kreislauf des zurückfließenden Brauchwassers (HWC) zwischen dem oberen und unteren Brauchwasserwärmetauscher (12, 10) angeschlossen ist.

## Revendications

1. Système de chauffage hybride, qui comprend
o un circuit principal d'un générateur de chaleur principal, comprenant, en parallèle, un échangeur de chaleur pour l'eau de service (10) et un échangeur de chaleur pour la circulation de l'eau de chauffage (14) qui seront chauffés par la chaleur principale,
o un circuit de chauffage (22) faisant circuler l'eau d'une manière contrôlable au niveau des points de consommation via ledit échangeur de chaleur pour la circulation de l'eau de chauffage (14) chauffée par la chaleur principale,
o des pompes à chaleur (HP1, HP2, HP3) reliées, chacune comprenant un compresseur (31), un détendeur (32), un évaporateur (34) et un condenseur (36a, 36b) et reliées de façon à utiliser en série le système de récupération de chaleur de l'air évacué (20) au moyen de leurs évaporateurs (34), dans lesquelles ladite source de chaleur comprend au moins un échangeur de chaleur de l'air évacué (20),
**caractérisé en ce que** lesdites pompes à chaleur (HP1, HP2, HP3) sont reliées en série de manière thermodynamique, et toutes les pompes sont reliées ensemble de manière à utiliser en série le système de récupération de chaleur de l'air évacué (20) au moyen de leurs évaporateurs (34) et de manière à émettre une chaleur secondaire en série au moyen de leurs condenseurs (36a) en tant que système monté en parallèle avec ledit échangeur de chaleur pour la circulation de l'eau de chauffage (14), et
le système de récupération de chaleur de l'air évacué (20) se compose de plusieurs éléments de récupération de chaleur de l'air évacué (201, 202, 203) reliés en série, dans lequel les circuits de fluide des deux côtés sont reliés en série et sont reliés ensemble à un contre-courant de telle sorte qu'une augmentation récurrente de la température du fluide et un refroidissement récurrent de l'air évacué ont lieu.

2. Système de chauffage hybride conformément à la revendication 1, **caractérisé en ce que** les pompes à chaleur (HP1, HP2, HP3) reliées thermodynamiquement en série, sont connectées sur le côté de l'évaporateur (34) et sur le côté du condenseur (36a, 36b) à chaque circuit de circulation par une connexion de dérivation au niveau de chaque arrivée et de chaque retour, c'est-à-dire qu'elles sont équipées sur le côté de l'évaporateur/du condenseur d'une pompe pour faire circuler le fluide à partir de chaque ligne partagée (342, 362).

3. Système de chauffage hybride conformément à la revendication 1 ou 2, **caractérisé en ce que** 2 à 6 pompes à chaleur, avantageusement 3 à 5 pompes à chaleur, sont fournies.

4. Système de chauffage hybride conformément à l'une quelconque des revendications 1 à 3, **caractérisé en ce que** 2 à 5, avantageusement 3 à 4, dispositifs de récupération de chaleur de l'air évacué reliés en série sont fournis.

5. Système de chauffage hybride conformément à l'une quelconque des revendications 1 à 4, **caractérisé en ce que** la différence de température globale sur le côté de l'évaporateur est comprise entre 10 et 20 °C, avantageusement entre 12 et 16 °C.

6. Système de chauffage hybride conformément à l'une quelconque des revendications 1 à 5, **caractérisé en ce que** l'effet global de l'eau de circulation en aval devant être chauffée/refroidie est compris entre 40 et 95 % de la somme combinée des multiples différences de température atteintes par le condensateur/l'évaporateur.

7. Système de chauffage hybride conformément à l'une quelconque des revendications 1 à 3, **caractérisé en ce que** le ventilateur (208) du système de récupération de chaleur de l'air évacué (20) se situe, dans le sens du flux, avant les éléments de récupération de chaleur de l'air évacué (201, 202, 203).

8. Système de chauffage hybride conformément à la revendication 1, **caractérisé en ce qu'**il y a un échangeur de chaleur de l'eau de service froide (12) relié de manière fonctionnelle en série auxdits échangeurs de chaleur reliés en parallèle, à savoir ledit échangeur de chaleur pour l'eau de service (10) et ledit échangeur de chaleur pour la circulation de l'eau de chauffage (14), et que la circulation de l'eau de service en retour (HWC) est reliée entre les échangeurs de chaleur supérieurs et inférieurs pour l'eau de service (12, 10).
